# EUROPEAN PATENT SPECIFICATION

(11) **EP 1 468 885 B1**
(45) Date of publication and mention of the grant of the patent: **15.08.2007**
(21) Application number: 04252193.0
(22) Date of filing: 15.04.2004
(51) Int. Cl.: B60S 1/24, F16C 7/06

(54) **Wiper mechanism**
Scheibenwischermechanismus
Mécanisme d'essuie-glace

(30) Priority: 18.04.2003 US 463729 P
(43) Date of publication of application: 20.10.2004
(73) Proprietor: Johnson Electric S.A., 2300 La Chaux-de-Fonds (CH)
(72) Inventor: Hultquist, Kevin Erik, Tai Po Industrial Estate NT Hong Kong (CN); Parmelee, Michael W., Tai Po Industrial Estate NT Hong Kong (CN)
(74) Representative: Hocking, Adrian Niall

(56) References cited:
- US-A- 5 465 636
- US-A- 5 566 577
- US-A- 6 131 474

## Description

### Field and Background of the Invention

This invention relates to windshield wipers and in particular, to a wiper mechanism for use in a single wiper unit.

One disadvantage of currently available wipers is that each wiper mechanism is set to give a single wipe angle, i.e., the angle that the wiper arm is moved. However, each application for the wiper is different and these differences generally require that the wiper arm be moved a different amount, i.e., have a different wipe angle. This currently means that the wiper linkage mechanism has to be redesigned for each application resulting in the manufacturer having to make and store a large range of linkage parts even though the basic wiper unit is the same.

Thus, there is a need for a linkage unit for a wiper mechanism which is flexible in assembly to enable different wipe angles to be achieved without using different parts. This can be achieved by varying the effective position of the drivers used to pivotally connect the linkage parts. The drivers are also known as ball joints and ball studs but are referred to herein as drivers.

It is known from US6131474 to provide a wiper mechanism which comprise a motor driving a crank through an output shaft. A connecting link connects a pivot lever and the crank. The pivot lever operates the wiper arm. Rotary motion of the crank causes oscillatory motion of the pivot lever.

### Summary of the Invention

Accordingly, in one aspect thereof, the present invention provides a connecting link for use in a windshield wiper mechanism, the link having an elongate body with first and second ends, the first end having at least one socket for connection to a driver for pivotable connection to a first lever, and the second end having at least two sockets for connecting to a driver for pivotable connection to a second lever wherein the effective length of the connecting link is changed by selecting various combinations of sockets at the first and second ends, characterized in that the sockets are holes in the body of the connecting link overmolded with plastic material to form a complementary bearing surface for the driver.

Preferably, there is one socket at the first end and two sockets at the second end.

According to a second aspect, the present invention also provides a windshield wiper mechanism comprising: a motor driving a crank through an output shaft; a pivot having a pivot lever and a first end adapted to receive a wiper arm, the pivot being arranged to drive the wiper arm in a back and forth motion, and a connecting link in accordance with the first aspect of the invention, wherein the connecting link is connected to the pivot lever by a lever driver received in a socket at one end of the connecting link and is connected to the crank by a crank driver received in a socket at the other end of the connecting link, whereby rotary motion of the crank causes oscillatory motion of the pivot through a predetermined wipe angle.

Preferably, the lever and/or crank have a plurality of mounting positions for the driver giving various effective lengths of the lever and/or crank.

Preferably, the driver is asymmetric with respect to means for connecting the driver to the lever an/or crank whereby relative orientation of the driver with respect to the lever and/or crank will vary the effective length thereof, thus varying the wipe angle.

Other optional and preferred features of the invention are set forth in the dependent claims.

### Brief Description of the Drawings

One preferred embodiment of the invention will now be described, by way of example only, with reference to the accompanying drawings in which:
Figure 1 is a perspective view of a drive mechanism for a windshield wiper;
Figure 2 is a part perspective part exploded view showing a part of the drive mechanism of Fig. 1 with an adapter;
Figure 3 is a view of a connecting link used in the drive mechanism of Fig. 1;
Figure 4 is a perspective view of the drive mechanism of Fig. 1 in a different configuration;
Figure 5 is a perspective view of the drive mechanism of Fig. 1 in another configuration;
Figure 6 is an elevational view of a pivot arm as used in the drive mechanism of Fig. 1;
Figure 7 is an exploded view of the pivot arm of Fig. 6;
Figure 8 is a sectional view of an eccentric driver; and
Figure 9 is a plan view from below of the eccentric driver of Fig. 8.

### Detailed Description of the Preferred Embodiments

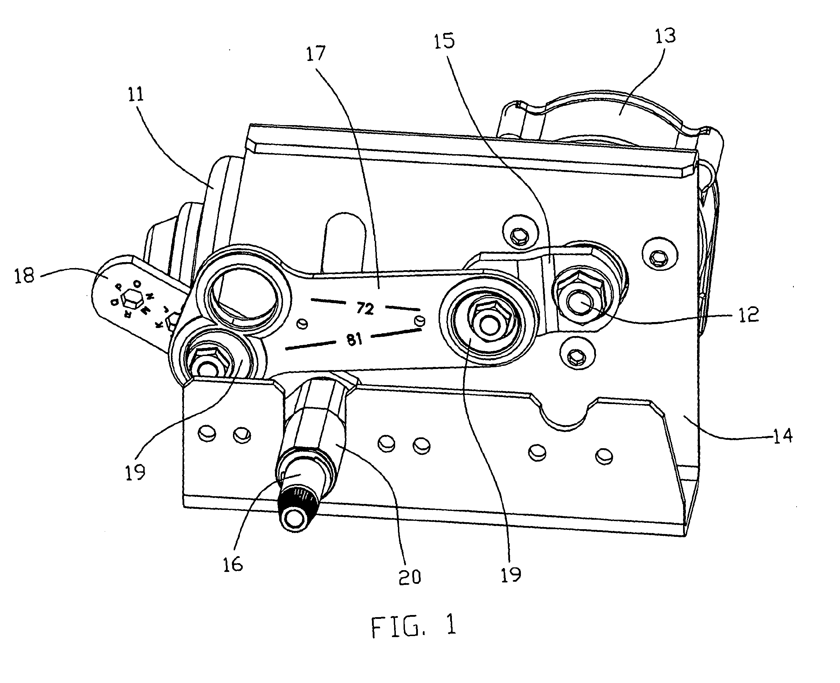

Figure 1 shows a drive mechanism 10 for a windshield wiper. The drive mechanism provides an oscillating pivot for driving or moving a wiper arm through a wipe angle, the predetermined angular range for wiping a windshield. The mechanism shown has a single pivot for driving a single wiper arm and therefore, is particularly suited for use in trucks and buses or other large vehicles with independent wipers or for use with rear windows.

The drive mechanism 10 comprises an electric motor 11 driving an output shaft 12 through a gearbox 13. The motor 11 and gearbox 13 are mounted on the back of a U-shaped bracket 14. An offset lever or crank 15 is fixed to the output shaft 12 for rotation therewith. The crank 15 drives a pivot 16 in an oscillating motion through a connecting link 17 and a lever 18. The effective lengths of the crank 15, link 17 and lever 18 determine the angular oscillations of the pivot 16. The connecting link 17 is pivotably connected to the crank 16 and lever 18 by drivers 19. The lever 18 is fixed to the pivot 16 for rotational movement therewith. The pivot 16 is supported by a bearing 20 which is mounted to the U-shaped bracket 14 which is used to mount the wiper mechanism to a vehicle for use therewith.

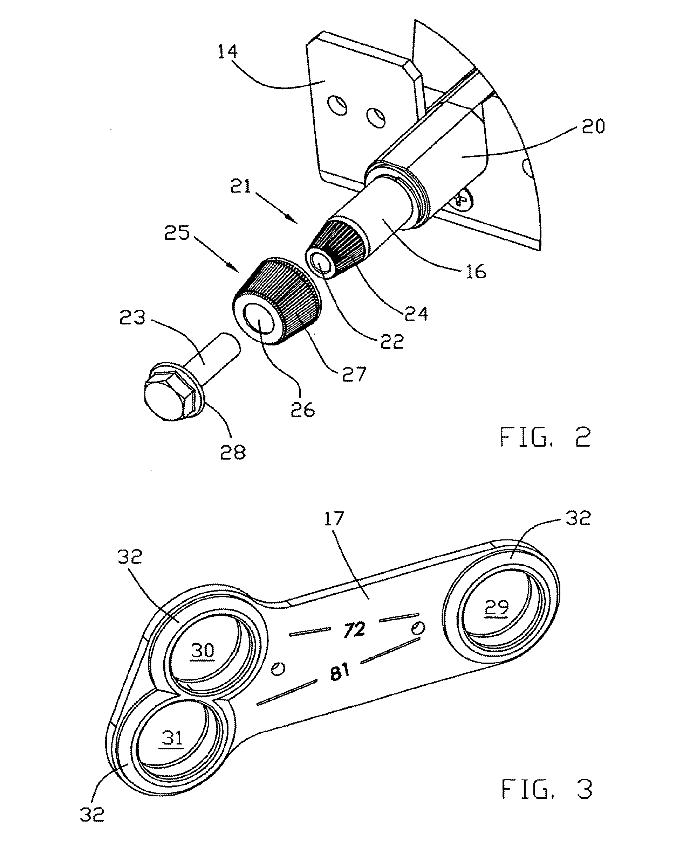

As shown in Figure 2, the pivot 16 has a distal end 21 remote from the lever 18 to which the wiper arm is connected. The distal end 21 of the pivot has an internally threaded axial hole 22 for receiving a screw 23 for fixing the wiper arm thereto. The outer surface of the distal end 21 has a tapered knurled portion 24 forming a coupling surface dimensioned to mate with a DIN style mounting socket of a wiper arm.

A ferrule 25 is provided for optional use to connect the pivot to a US style mounting socket of a wiper arm. The ferrule 25 has a through hole 26 with a tapered knurled inner surface (not shown) arranged to mate with the DIN style tapered knurled portion 24 of the pivot 16. The outer surface 27 of the ferrule 25 is tapered and knurled according to US style wiper requirements. In use, the ferrule 25 is placed on the tapered portion 24 of the pivot 16 with the knurls meshed and a wiper arm with a US style mounting socket is placed onto the ferrule and the screw 23 placed through a hole in the wiper arm mount and the ferrule hole 26 and threadedly engages the hole 22 in the pivot 16. The screw 23 is tightened so that a flange 28 on the head of the screw bears down on the wiper arm mount and maintains the wiper arm fixedly secured to the pivot via the ferrule.

Wiper arms with DIN style mounting sockets are fitted in a similar way directly to the tapered knurled portion 24 of the pivot 16 without the use of the ferrule 25. Use of the ferrule negates the need to manufacture and maintain separate wiper mechanisms for DIN style and US style wiper arms, thereby reducing inventory.

Referring now to Fig. 3, the connecting link 17 is a generally elongated plate having a hole 29 at one end and two holes 30, 31 at the other end. Each hole has a plastic lining or grommet 32 providing a bearing interface between the connecting link 17 and the pivotable connection or driver 19 used to connect the connecting link 17 to the crank 15 and pivot lever 18. The distance between holes 29 and 30 is less than the distance between the holes 29 and 31. The grommets 32 may be molded directly to the link 17 in which case the grommets 32 for holes 30 and 31 may be integrally formed or joined together. The plate is preferably of an aluminum alloy material.

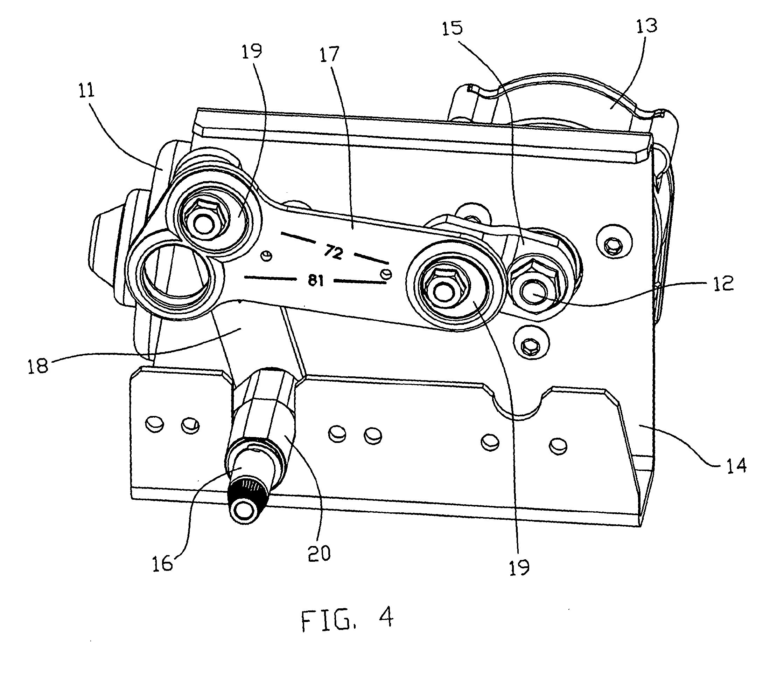

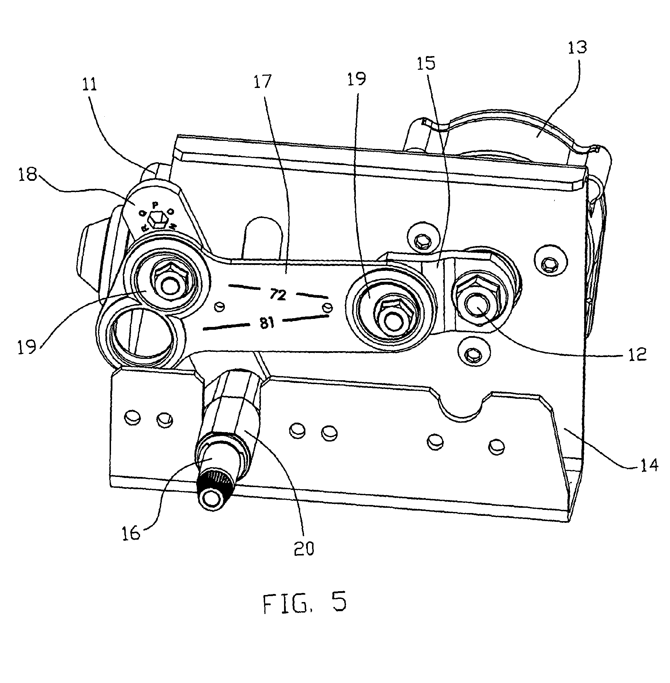

As shown in the assembly figures (Figures 1, 4 and 5), the end of the connecting link with a single hole or first hole 29 is connected to the crank 15 via a first driver 19. The other end of the connecting link 17 is connected to the pivot 16 via a second driver 19 attached to the lever 18 and coupled to one of the two available holes 30, 31 of the link.

The second and third holes 30, 31 are formed or located at predetermined distances from the first hole 29 such that the first and second predetermined distances are not equal. In this embodiment, the first distance, the distance between the first hole 29 and the second ,hole 30 is 72 mm while the second predetermined distance, the distance between the first hole 29 and the third hole 31, is 81 mm, center to center. Coupling the driver 19 on the lever 18 to the second hole 30 or the third hole 31 changes the effective or operational length of the connecting link 17 which in turn changes the wipe angle, i.e., the angular distance that one turn of the crank 15 will cause the pivot 16 to move.

Thus, this one connecting link 17 now can provide the function of two separate connecting links. While a connecting link with three holes can provide two desired wipe angles, connecting links with more than three holes are possible, such as four holes (two at each end) (four separate distances) or three holes at one end and one hole at the other end (three separate distances) could be used.

To increase the number of separate wipe angles, the pivot lever 18 is provided with a number of holes 33 for mounting of the driver 19. In the preferred embodiment as illustrated, the lever 18 has three separate driver mounting holes 33, each giving a different effective lever length (from pivot to driver), thus giving a different range of movement of the pivot when use with the second hole 30 or third hole 31 of the connecting link 17. Thus, three different effective lever lengths with two different effective connecting link lengths give six different wipe angles. For example, these six wipe angles could be, say, 100°, 85°, 70°, 60°, 50°, 40°.

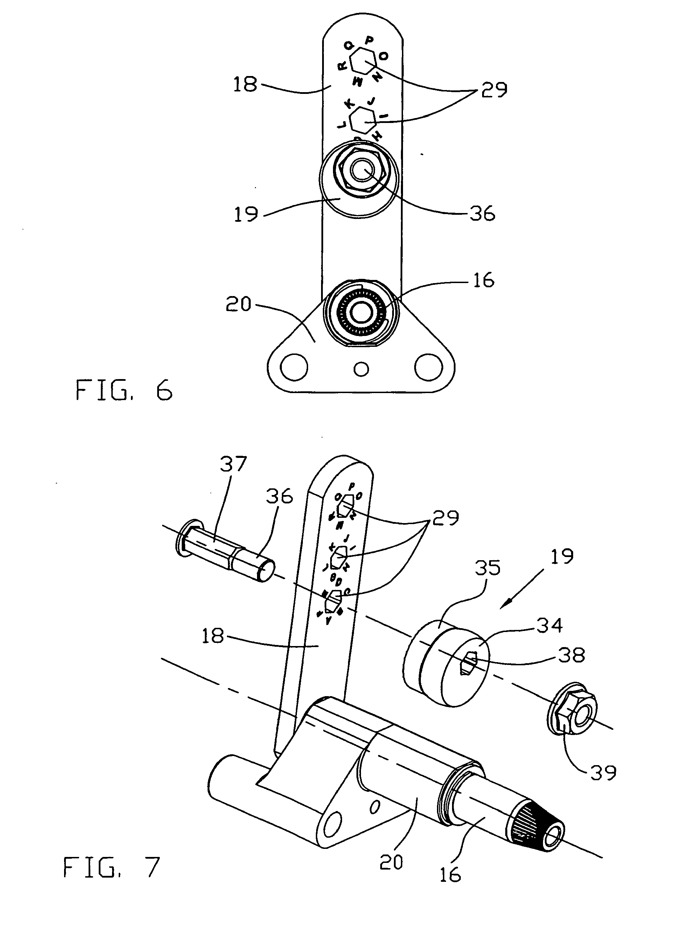

As the drivers 19 are identical, only the driver connected to the pivot lever will be described in detail with reference to Figures 6 and 7. The driver 19 has a part spherical portion 34 which mates with the plastic liner 32 of the connecting link 17 and a base portion 35 which spaces the spherical portion 34 away from the lever 18. The holes 29 in the lever 18 are hexagonal and receive a screw 36 with a hexagonal shank 37. The driver 19 also has a hexagonal hole 38 for receiving the screw 36. A nut 39 is threaded on the end of the screw 36 to fix the driver 19 to the lever 18.

To give even more variations to the effective lever length and crank length, the driver may have an offset or eccentricism as illustrated by the eccentric drivers of the preferred embodiments where the hole through the driver is offset from the central axis of the part spherical portion 34. As the shank 37 of the screw 36 is hexagonal and the mounting hole 38 in the driver 19 is also hexagonal, the driver 19 can be positioned in one of six different orientations. By careful selection of the offset direction and the orientation of the hexagonal mounting holes 29 in the lever 18, these six different orientations can give up to six different effective lever lengths or throws (distance from pivot center to driver center).

Thus the throw will be varied depending on driver orientation and the amount of offset. With six possible positions on the lever driver and six positions on the crank driver giving 36 driver positions and with three lever lengths and two connecting link lengths as illustrated, a total of 216 different combinations are possible affecting the wipe angle of the pivot. However, some combinations may result in duplicate wipe angles. Even so, a typical combination may give 54 unique wipe angles ranging from 41° to 108°.

Even with symmetrical alignment of the hexagonal mounting holes 29 and driver offset giving only three unique distance changes per driver, this still gives a large range of available wipe angles for vehicle manufacturers to select for their particular application from a single wiper mechanism. Thus this gives greater choice and freedom of design while reducing inventory.

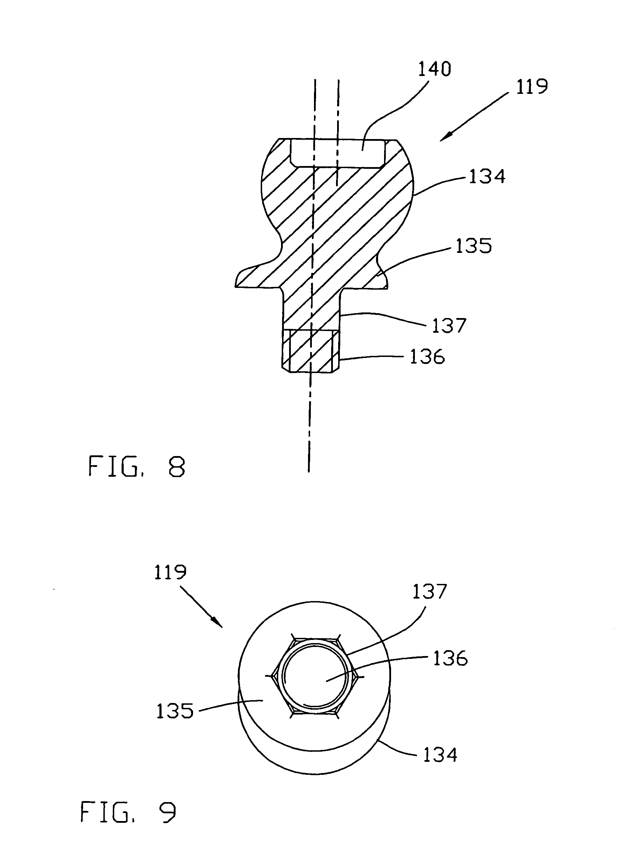

Figures 8 and 9 illustrate an alternative offset driver where the mounting hole and screw are replaced by an integral driver 119 in which a shaft 136 projects from the base portion 135 for mounting to the lever or crank. The shaft 126 engages a nut (not shown) to secure the driver 119 to the lever or crank and the shaft 136 has a hexagonal shank 137 for keying the driver 119 to the hexagonal holes in the lever or crank.

A recess 140 is formed on the top of the driver 119 to form a reservoir for grease to lubricate the coupling.

The embodiment described above is given by way of example only and various modifications will be apparent to persons skilled in the art without departing from the scope of the invention as defined in the appended claims.

For example, it may not be necessary for an acceptable wiper model to include all of the features of the preferred embodiment such as the extra hole in the connecting link and in the lever or maybe to provide extra holes in the crank instead.

Also, the driver or its mounting screw may have a shank which is not hexagonal in cross section, e.g. square giving up to four offset lengths or triangular giving up to only three offset lengths, etc.

In an alternate embodiment of the driver, the fixing screw may have a non-circular shank, e.g., triangular, square, hexagonal, etc. and an offset threaded shaft portion which screws into or passes through a coaxial mounting hole in the driver. This allows for offset mounting of a standard driver.

## Claims

1. A connecting link for use in a windshield wiper mechanism, the link (17) having an elongate body with first and second ends, the first end having at least one socket (29) for connection to a driver (19) for pivotable connection to a first lever (15), and the second end having at least two sockets (30, 31) for connecting to a driver (19) for pivotable connection to a second lever (18) wherein the effective length of the connecting link (17) is changed by selecting various combinations of sockets (29, 30, 31) at the first and second ends, **characterized in that** the sockets (29, 30, 31) are holes in the body of the connecting link (17) overmolded with plastic material (32) to form a complementary bearing surface for the driver (19).

2. The connecting link of claim 1 wherein there is one socket (29) at the first end and two sockets (30, 31) at the second end.

3. The connecting link of claim 2 wherein the effective lengths of the connecting link (17) are 82 cm and 75 cm.

4. The connecting link of claim 1 wherein the body of the connecting link (17) is aluminum alloy.

5. A windshield wiper mechanism comprising:
a motor (11) driving a crank (15) through an output shaft (12);
a pivot (16) having a pivot lever (18) and a first end (21) adapted to receive a wiper arm, the pivot (16) being arranged to drive the wiper arm in a back and forth motion, and
a connecting link (17) as defined in claim 1 wherein the connecting link (17) is connected to the pivot lever (18) by a lever driver (19) received in a socket (30, 31) at one end of the connecting link (17) and is connected to the crank (15) by a crank driver (19) received in a socket (29) at the other end of the connecting link (17),
whereby rotary motion of the crank (15) causes oscillatory motion of the pivot (16) through a predetermined wipe angle.

6. The mechanism of claim 5 wherein the lever (17) has a plurality of mounting positions for the lever driver (19), each mounting position providing a different effective length of the lever (17) thereby varying the wipe angle.

7. The mechanism of claim 6 wherein the lever driver (19) is asymmetric with respect to means for connecting the lever driver (19) to the lever (18) whereby relative orientation of the lever driver (19) with respect to the lever (18) at any one of the lever driver mounting positions varies the effective length of the lever (18) thereby varying the wipe angle.

8. The mechanism of claim 5 wherein the crank (15) has a plurality of mounting positions for the crank driver (19), each mounting position providing a different effective length of the crank (15) thereby varying the wipe angle.

9. The mechanism of claim 8 wherein the crank driver (19) is asymmetric with respect to means for fixing the crank driver (19) to the crank (15) whereby relative orientation of the crank driver (19) with respect to the crank (15) at any one of the crank driver mounting positions varies the effective length of the crank (15) thereby varying the wipe angle.

10. The mechanism of claim 5 wherein the drivers (19) have offset mounts where by fixing the drivers (19) to the lever (18) and crank (15) at different orientations relative to the lever (18) or crank (15) will produce different effective lengths of the lever (18) or crank (15) thereby varying the wipe angle.

## Patentansprüche

1. Verbindungsglied für den Einsatz bei einem Windschutzscheiben-Wischermechanismus, wobei das Glied (17) einen länglichen Körper mit einem ersten und einem zweiten Ende aufweist, wobei das erste Ende mindestens eine Aufnahme (29) für den Anschluss an einen Mitnehmer (19) aufweist, der zur verdrehbaren Verbindung mit einem ersten Hebel (15) dient, und das zweite Ende mindestens zwei Aufnahmen (30, 31) für den Anschluss an einen Mitnehmer (19) aufweist, der zur verdrehbaren Verbindung mit einem zweiten Hebel (18) dient, wobei die wirksame Länge des Verbindungsgliedes (17) durch die Auswahl von verschiedenen Kombinationen von Aufnahmen (29, 30, 31) an dem ersten und dem zweiten Ende geändert wird, **dadurch gekennzeichnet, dass** die Aufnahmen (29, 30, 31) Löcher im Körper des Verbindungsgliedes (17) sind, die mit Kunststoff (32) überspritzt werden, um eine komplementäre Lagerfläche für den Mitnehmer (19) auszubilden.

2. Verbindungsglied nach Anspruch 1, bei dem es eine Aufnahme (29) am ersten Ende und zwei Aufnahmen (30, 31) am zweiten Ende gibt.

3. Verbindungsglied nach Anspruch 2, bei dem die wirksamen Längen des Verbindungsgliedes (17) 82 cm und 75 cm betragen.

4. Verbindungsglied nach Anspruch 1, bei dem der Körper des Verbindungsgliedes (17) aus einer Aluminiumlegierung besteht.

5. Windschutzscheiben-Wischermechanismus, umfassend:
einen Motor (11), der über eine Abtriebswelle (12) eine Kurbel (15) antreibt;
einen Drehzapfen (16), der einen Drehzapfenhebel (18) und ein erstes Ende (21) aufweist, das für die Aufnahme eines Scheibenwischerarms ausgelegt ist, wobei der Drehzapfen (16) angeordnet ist, um den Scheibenwischerarm in einer Vorwärts-Rückwärtsbewegung anzutreiben; und
ein Verbindungsglied (17) nach Anspruch 1, wobei das Verbindungsglied (17) mit dem Drehzapfenhebel (18) über einen Hebelmitnehmer (19) verbunden ist, der in einer Aufnahme (30, 31) an einem Ende des Verbindungsgliedes (17) aufgenommen wird und mit der Kurbel (15) über einen Kurbelmitnehmer (19) verbunden ist, der in einer Aufnahme (29) am anderen Ende des Verbindungsgliedes (17) aufgenommen wird,
wodurch die Drehbewegung der Kurbel (15) eine oszillierende Bewegung des Drehzapfens (16) über einen vorgegebenen Wischwinkel hervorruft.

6. Mechanismus nach Anspruch 5, bei dem der Hebel (17) eine Vielzahl von Einbaupositionen für den Hebelmitnehmer (19) aufweist, wobei jede Einbauposition eine unterschiedliche wirksame Länge des Hebels (17) bereitstellt, wodurch der Wischwinkel geändert wird.

7. Mechanismus nach Anspruch 6, bei dem der Hebelmitnehmer (19) in Bezug auf die Mittel zum Verbinden des Hebelmitnehmers (19) mit dem Hebel (18) asymmetrisch ist, wodurch die relative Ausrichtung des Hebelmitnehmers (19) in Bezug auf den Hebel (18) an jeder der Hebelmitnehmer-Einbaupositionen die wirksame Länge des Hebels (18) ändert, wodurch der Wischwinkel geändert wird.

8. Mechanismus nach Anspruch 5, bei dem die Kurbel (15) eine Vielzahl von Einbaupositionen für den Kurbelmitnehmer (19) aufweist, wobei jede Einbauposition eine unterschiedliche wirksame Länge der Kurbel (15) bereitstellt, wodurch der Wischwinkel geändert wird.

9. Mechanismus nach Anspruch 8, bei dem der Kurbelmitnehmer (19) in Bezug auf die Mittel zum Befestigen des Kurbelmitnehmers (19) an der Kurbel (15) asymmetrisch ist, wodurch die relative Ausrichtung des Kurbelmitnehmers (19) in Bezug auf die Kurbel (15) an jeder der Kurbelmitnehmer-Einbaupositionen die wirksame Länge der Kurbel (15) ändert, wodurch der Wischwinkel geändert wird.

10. Mechanismus nach Anspruch 5, bei dem die Mitnehmer (19) seitlich versetzte Aufnahmen aufweisen, so dass **dadurch**, dass die Mitnehmer (19) an dem Hebel (18) und der Kurbel (15) in verschiedenen Ausrichtungen in Bezug auf den Hebel (18) oder die Kurbel (15) befestigt werden, unterschiedliche wirksame Längen des Hebels (18) oder der Kurbel (15) erzeugt werden, wodurch der Wischwinkel geändert wird.

## Revendications

1. Biellette de liaison destinée à être utilisée dans un mécanisme d'essuie-glace, la biellette (17) comportant un corps allongé avec des première et deuxième extrémités, la première extrémité comportant au moins une douille (29) en vue de la connexion à un entraîneur (19) pour assurer une liaison à pivotement sur un premier levier (15), la deuxième extrémité comportant au moins deux douilles (30, 31) en vue de la connexion à un entraîneur (19) pour assurer la liaison à pivotement avec un deuxième levier (18), la longueur effective de la biellette de liaison (17) étant changée en sélectionnant différentes combinaisons de douilles (29, 30, 31) au niveau des première et deuxième extrémités, **caractérisé en ce que** les douilles (29, 30, 31) sont des trous dans le corps de la biellette de liaison (17), surmoulés par un matériau plastique (32) pour former une surface de support complémentaire pour l'entraîneur (19).

2. Biellette de liaison selon la revendication 1, comportant une douille (29) au niveau de la première extrémité et deux douilles (30, 31) au niveau de la deuxième extrémité.

3. Biellette de liaison selon la revendication 2, dans laquelle les longueurs effectives de la biellette de liaison (17) correspondent à 82 cm et à 75 cm.

4. Biellette de liaison selon la revendication 1, dans laquelle le corps de la biellette de liaison (17) est composé d'un alliage d'aluminium.

5. Mécanisme d'essuie-glace, comprenant :
un moteur (11) entraînant une manivelle (15) à travers un arbre de sortie (12);
un pivot (16) comportant un levier de pivot (18) et une première extrémité (21) configurée de sorte à recevoir un bras d'essuie-glace, le pivot (16) étant destiné à entraîner le bras d'essuie-glace dans un déplacement vers l'arrière et vers l'avant ; et
une biellette de liaison (17) comme défini dans la revendication 1, la biellette de liaison (17) étant connectée au levier du pivot (18) par un entraîneur du levier (19) reçu dans une douille (30, 31) au niveau d'une extrémité de la biellette de liaison (17) et connecté à la manivelle (15) par un entraîneur de la manivelle (19) reçu dans une douille (29) au niveau de l'autre extrémité de la biellette de liaison (17) ;
le déplacement rotatif de la manivelle (15) entraînant un déplacement oscillatoire du pivot (16) à un angle d'essuyage prédéterminé.

6. Mécanisme selon la revendication 5, dans lequel le levier (17) comporte plusieurs positions de montage pour l'entraîneur du levier (19), chaque position de montage établissant une longueur effective différente du levier (17), changeant ainsi l'angle d'essuyage.

7. Mécanisme selon la revendication 6, dans lequel l'entraîneur du levier (19) est asymétrique par rapport au moyen destiné à connecter l'entraîneur du levier (19) au levier (18), l'orientation relative de l'entraîneur du levier (19) par rapport au levier (18) au niveau d'une quelconque des positions de montage de l'entraîneur du levier changeant la longueur effective du levier (18), changeant ainsi l'angle d'essuyage.

8. Mécanisme selon la revendication 5, dans lequel la manivelle (15) comporte plusieurs positions de montage pour l'entraîneur de la manivelle (19), chaque position de montage établissant une longueur effective différente de la manivelle (15), changeant ainsi l'angle d'essuyage.

9. Mécanisme selon la revendication 8, dans lequel l'entraîneur de la manivelle (19) est asymétrique par rapport au moyen destiné à fixer l'entraîneur de la manivelle (19) sur la manivelle (15), l'orientation relative de l'entraîneur de la manivelle (19) par rapport à la manivelle (15), au niveau d'une quelconque des positions de montage de l'entraîneur de la manivelle changeant ainsi la longueur effective de la manivelle (15), changeant ainsi l'angle d'essuyage.

10. Mécanisme selon la revendication 5, dans lequel les entraîneurs (19) comportent des supports décalés, la fixation des entraîneurs (19) sur le levier (18) et la manivelle (15) à des orientations différentes par rapport au levier (18) ou à la manivelle (15) devant établir ainsi des longueurs effectives différentes du levier (18) ou de la manivelle (15), changeant ainsi l'angle d'essuyage.
